# FASCICULE DE BREVET EUROPEEN

(11) **EP 3 728 001 B1**
(45) Date de publication et mention de la délivrance du brevet: **14.06.2023**
(21) Numéro de dépôt: 18766321.6
(22) Date de dépôt: 20.08.2018
(51) Int. Cl.: B62D 25/04

(54) **PIED AVANT RENFORCE DE VEHICULE**
VERSTÄRKTE A-SÄULE FÜR EIN FAHRZEUG
STRENGTHENED A-PILLAR FOR A VEHICLE

(30) Priorité: 29.09.2017 FR 1759051
(43) Date de publication de la demande: 28.10.2020
(73) Titulaire: PSA Automobiles SA, 78300 Poissy (FR)
(72) Inventeur: MAGAS, Mihaela Maria, 70110 Autrey Les Cerre (FR); DIAW, Baye, 25420 Courcelles Les Montbeliard (FR)
(86) Numéro de dépôt international: PCT/FR2018/052081
(87) Numéro de publication internationale: WO 2019/063893

(56) Documents cités:
- FR-A1- 2 925 454
- FR-A1- 2 932 149
- US-A- 6 139 093

## Description

La présente invention a trait au domaine des véhicules automobiles, et plus particulièrement au renforcement du bloc avant de la structure des véhicules automobiles en cas de chocs frontaux.

Les pieds avant sont des pièces de renfort essentielles du bloc avant d'un véhicule automobile car ils permettent en particulier d'absorber les efforts dus à un choc frontal à haute vitesse. Ce type de choc est en particulier utilisé pour les essais consuméristes des véhicules selon les normes européennes EuroNcap, il consiste en fait en un choc frontal à 64km/h contre une barrière déformable, le taux de recouvrement entre l'avant du véhicule et la barrière-étant de 40%.

Pour mieux répartir les efforts appliqués à l'avant de la structure de la caisse lors d'un choc frontal à haute vitesse, le bloc avant bénéficie généralement d'une triple voie d'effort constituée d'une voie basse sous la traverse de pare-chocs, d'une voie haute *via* la traverse de pare-chocs et les brancards, et d'une troisième voie au-dessus de la voie haute, et le pied avant forme justement la partie du bloc avant qui se situe derrière la troisième voie d'effort, généralement dans le prolongement d'un renfort latéral avant de côté d'habitacle. Cette troisième voie d'effort a pour rôle spécifique de transmettre les efforts vers le bas d'un côté de caisse, le bandeau de porte et le montant de baie. Il est donc important lors de la cinématique d'un choc frontal à haute vitesse que le pied avant, qui sert de noeud de passage pour la transmission de ces efforts vers l'arrière de la structure de caisse et la porte avant, constitue une barrière pouvant présenter une bonne stabilité pour résister aux différentes poussées. En effet, une forte déformation non maîtrisée ou un effondrement total du pied avant, dû à des pressions trop élevées, génère en principe un écrasement de l'habitacle du véhicule ainsi que des intrusions d'éléments, mettant alors en danger la vie des occupants.

Pour limiter ou contrôler les déformations du pied avant et lui permettre de mieux résister aux déformations, il est connu de rajouter des renforts tels que par exemple un renfort charnière ou une cloison supérieure de pied avant. Toutefois, ces renforts bien que remplissant leur rôle de protection s'avèrent être néanmoins insuffisants lorsque le choc frontal a lieu sur des véhicules plus lourds par exemple de type utilitaire, ou lorsque la construction du pied avant impacté est défavorable.

Le document brevet publié FR 2 925 454 B1 décrit un nouveau pied avant renforcé d'un véhicule automobile. Ce nouveau pied est constitué en fait en deux parties, à savoir une partie supérieure et une partie inférieure, ces deux parties étant également désignées respectivement, gousset de pied avant et renfort de pied avant. La partie inférieure est formée d'une seule pièce en forme de demi-boîte obtenue par emboutissage. Cette pièce présente en outre une arête supérieure qui permet d'offrir au pied avant une raideur maximale. Toutefois, bien que la zone de raidissement du pied avant soit à l'extrémité supérieure de la partie inférieure du pied avant, c'est-à-dire à proximité du renfort latéral du côté d'habitacle qui constitue un des éléments de la troisième voie d'effort, cet apport de raideur a seulement pour effet de limiter la rotation du pied avant et d'empêcher sa désolidarisation de la porte avant. Par conséquent, ce nouveau pied avant renforcé ne permet pas d'empêcher ou de limiter de manière contrôlée la déformation d'un pied avant d'un véhicule lourd suite à un choc frontal à 64km/h.

Le document FR 2 932 149 A1 décrit une autre structure de véhicule comprenant un pied avant et un raidisseur selon le préambule de la revendication indépendante 1.

L'invention a pour objectif de palier au moins un des inconvénients de l'état de l'art susmentionné. Plus particulièrement, l'invention a pour objectif d'améliorer la stabilité des pieds avant d'un véhicule lourd sous la poussée d'un choc frontal à haute vitesse effectué selon les normes européennes EuroNcap, ainsi que la tenue des liaisons du pieds avant, et ce de manière simple et économique, sans substantielle augmentation de masse.

A cet effet, l'invention a pour objet une structure de véhicule automobile, comprenant un habitacle avec deux côtés opposés latéralement ; et au moins un pied avant formant une poutre creuse s'étendant verticalement à l'avant et à un des deux côtés de l'habitacle, ledit pied comprenant une zone de fixation de charnière inférieure de porte avant et une zone de fixation de charnière supérieure de ladite porte ; remarquable en ce que le ou chacun des pieds avant comprend, en outre, un raidisseur situé sur une face avant de la poutre creuse, entre les zones de fixation des charnières supérieure inférieure.

Avantageusement, les deux côtés opposés latéralement comprennent chacun un pied avant.

Selon l'invention, le ou chacun des raidisseurs est une plaque de profil en U ou en L, et la poutre creuse du ou de chacun des pieds avant comprend une paroi avec une portion longitudinale extérieure, une portion transversale avant formant la face avant de ladite poutre et une portion coudée reliant lesdites portions longitudinales et transversales, la plaque de raidisseur correspondante épousant, sur une hauteur donnée, au moins partiellement la portion longitudinale, la portion coudée et au moins partiellement la portion transversale.

Selon un mode avantageux de l'invention, ladite structure comprend, en outre, au moins un renfort latéral avant s'étendant vers l'avant depuis le ou un des pieds avant et au-dessus d'une baie de roue située devant ledit pied, le raidisseur correspondant étant situé entre ledit renfort et la poutre creuse dudit pied avant.

Selon un mode avantageux de l'invention, la plaque du ou de chacun des raidisseurs présente une épaisseur supérieure à 0.8mm et/ou inférieure à 2mm.

Selon un mode avantageux de l'invention, le ou chacun des renforts latéraux avant comprend des pattes de fixation à la portion longitudinale extérieure et à la portion transversale avant de la paroi de la poutre correspondante, le raidisseur correspondant comprenant une portion supérieure entre lesdites pattes et lesdites portions de paroi et une portion inférieure située en dessous dudit renfort.

Selon un mode avantageux de l'invention, le ou chacun des pieds avant comprend, en outre, un renfort de charnière supérieure situé au-dessus du raidisseur correspondant.

Selon un mode avantageux de l'invention, le ou chacun des renforts de charnière comprend une portion située entre le renfort latéral avant et la poutre creuse correspondants.

Selon un mode avantageux de l'invention, la poutre creuse du ou de chacun des pieds avant comprend une section en U avec une portion latérale extérieure, une portion transversale avant et une portion transversale arrière, le renfort de charnière correspondant présentant un profil en U épousant la section en U de ladite poutre. Selon un mode avantageux de l'invention, le ou chacun des raidisseurs est fixé à la poutre creuse correspondante par des points de soudure électrique par résistance. Les mesures de l'invention sont intéressantes en ce qu'elles permettent d'améliorer la stabilité d'un pied avant à l'encontre des efforts transmis lors d'un choc frontal sur ce véhicule et donc d'empêcher ou de limiter la déformation de ce pied. Cette invention est d'autant plus intéressante que le renforcement du pied avant est réalisé à l'aide d'un seul raidisseur de conception simple. Le positionnement et la structure de cette pièce permet en fait d'éviter toute déformation importante du pied avant pouvant provenir soit d'une poussée selon une direction longitudinale en X *via* la troisième voie d'effort ou soit d'une traction selon une direction verticale en Y *via* la traction du tablier supérieur.

D'autres caractéristiques et avantages de la présente invention seront mieux compris à l'aide de la description et des dessins parmi lesquels :
- La figure 1 montre une vue en perspective d'une portion de la partie avant gauche d'une structure de véhicule automobile selon l'art antérieur.
- Les figures 2A et 2B illustrent un pied avant de la structure de véhicule automobile de la figure 1, avant et après un choc frontal.
- La figure 3 est une vue en perspective du pied avant gauche de la structure de véhicule automobile selon l'invention.
- La figure 4 est une vue de détail d'un pied avant droit d'une structure de véhicule automobile selon l'invention.
- La figure 5 correspond à la figure 4 où le pied avant est pourvu, en outre, d'un renfort de charnière supérieure.
- La figure 6 illustre les déformations des éléments de la troisième voie d'effort et d'un pied avant d'une structure de véhicule automobile selon l'invention.

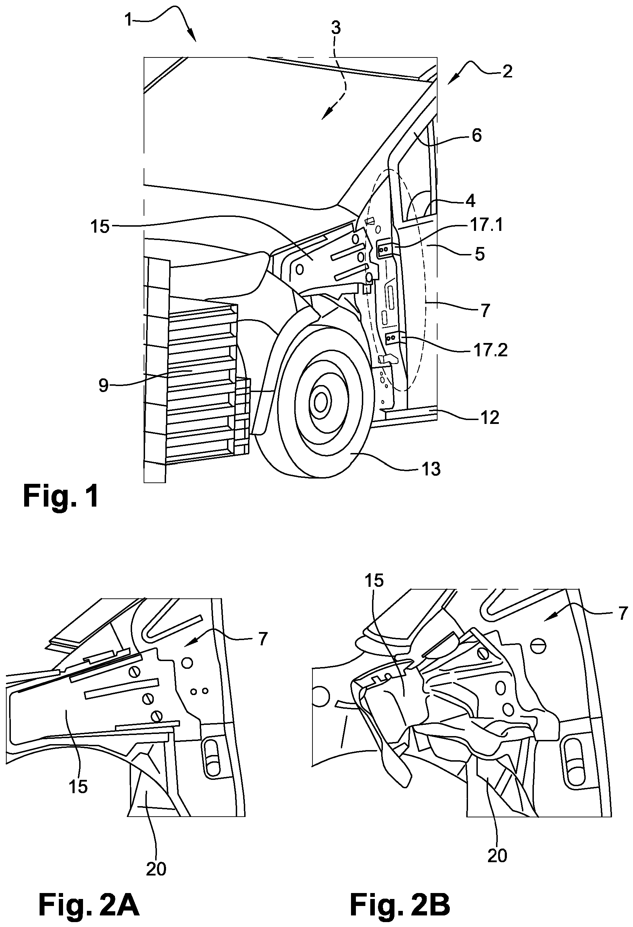

La figure 1 présente une vue en perspective d'une portion d'une structure 1 de véhicule automobile selon l'art antérieur. Cette portion correspond en l'occurrence à la partie avant gauche du bloc avant du véhicule. Elle comprend en particulier une partie d'un côté 2 de l'habitacle 3, une porte avant 5, un pied avant 7 sur lequel sont fixées les charnières supérieure 17.1 et inférieure 17.2 de la porte avant 5, et fixé à l'avant du pied avant 7 au-dessus de la roue 13 un renfort latéral 15 avant de côté d'habitacle. Le renfort latéral 15 fait partie des éléments de la troisième voie d'effort par laquelle une partie des efforts générés par un choc avant frontal à 64km/h contre une barrière est transmise au pied avant 7.

Lors d'un choc frontal effectué lors d'essais consuméristes contre une barrière 9 déformable, le pare-chocs (non visible) se déforme très rapidement et les éléments 15 de la troisième voie d'effort doivent se comprimer et transmettre les efforts *via* le pied avant 7 vers le bas du côté de caisse 12, le bandeau de porte 4, et le montant de baie 6.

Les figures 2A et 2B illustrent la chronologie d'un choc frontal sur le bloc avant de la structure 1 de véhicule automobile de la figure 1. En l'occurrence, ces figures 2A et 2B montrent respectivement, l'état de la portion du pied avant 7 située à l'arrière du renfort latéral 15 avant d'un côté d'habitacle, avant et après une poussée longitudinale selon un axe X. Sur ces figures, le pied avant 7 est notamment formé d'une partie supérieure et d'une partie inférieure.

Sur la figure 2A, avant le choc frontal à 64km/h, le renfort latéral 15 et le pied avant 7 sont intacts mais sur la figure 2B, après le choc frontal, le renfort latéral 15 a subi de fortes contraintes et a été comprimé contre la face avant 20 du pied avant 7. Ce dernier ne présentant pas une stabilité suffisante a donc subi une déformation non maîtrisée ou un effondrement, et sa capacité à transmettre les efforts a été diminuée ou a disparu.

Il est à noter que la sollicitation du pied avant 7 lors d'un choc frontal peut également venir d'une traction verticale selon un axe Y (non représentée) mais dans ce cas, elle se fait *via* la traction du tablier supérieur (non représenté). Dans tous les cas, si la traction est importante, il en résulte, de la même manière, une instabilité du pied avant 7 qui se traduit par une déformation importante de celui-ci.

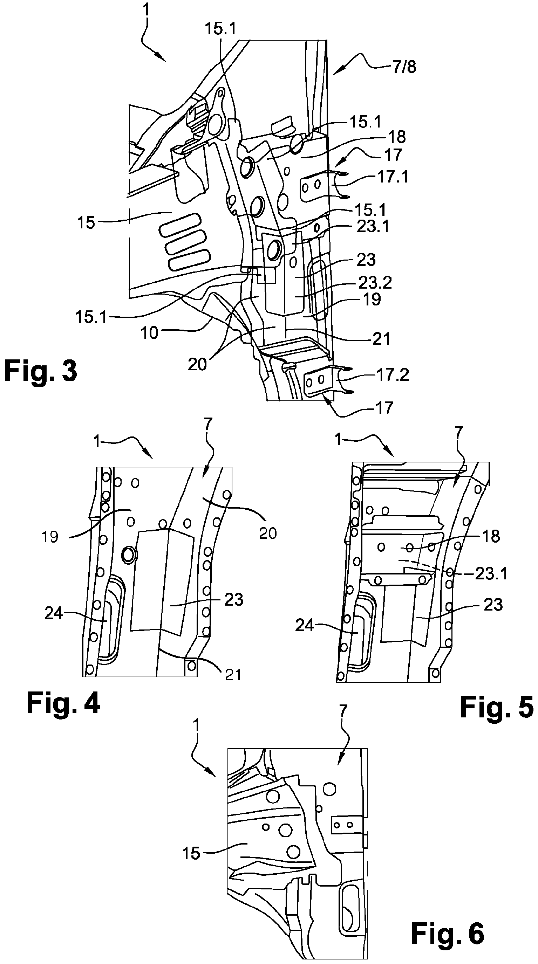

La figure 3 montre une vue en perspective d'une vue détaillée d'une portion de la partie avant gauche d'une structure 1 de véhicule automobile selon l'invention. Cette portion comprend un pied avant 7 qui forme un montant ayant la forme d'une poutre 8 creuse et qui s'étend verticalement à l'avant du côté gauche de l'habitacle. Ce pied avant 7 comprend deux zones de fixation 17 de charnière de porte 5 avant, à savoir la charnière supérieure 17.1 .et la charnière inférieure 17.2. Comme illustré sur la figure 3, la paroi de la poutre 8 creuse du pied avant 7 gauche comprend trois portions 19, 20, 21, à savoir une première portion longitudinale extérieure 19, une seconde portion transversale avant 20 qui constitue la face avant 20 du pied avant 7, et une troisième portion 21 coudée qui relie les deux précédentes portions 19, 20. Sur la face avant 20 de la poutre 8 creuse du pied avant 7 et en particulier entre les zones de fixation 17 de la charnière supérieure 17.1 et de la charnière inférieure 17.2 de la porte avant 5 (non représentée), est fixé un raidisseur 23. Ce raidisseur 23 a pour fonction de renforcer la structure de la poutre 8 creuse du pied avant 7 de manière à ce que ce pied avant 7 puisse être plus stable et mieux résister aux poussées des efforts engendrées par un choc avant frontal. A cette, fin le raidisseur 23 est une plaque de forme en L en acier qui épouse sur une hauteur donnée, au moins partiellement la portion longitudinale 19 et la portion coudée 21, et au moins partiellement aussi la portion transversale 20 du pied avant 7 gauche. Avantageusement, le raidisseur 23 est fixé sur la poutre 8 creuse du pied avant 7 par des points de soudure électrique.

Il est noté également que cette structure 1 de véhicule automobile selon l'invention comprend également au moins un renfort latéral 15 avant, en l'occurrence sur la figure 3 ce renfort latéral 15 avant est un renfort de côté d'habitacle gauche. Ce renfort 15 s'étend notamment vers l'avant depuis le pied avant 7 gauche et au-dessus de la baie de roue 10 située devant le pied avant 7. Le raidisseur 23 du pied avant 7 est en particulier situé entre le renfort latéral 15 et la poutre 8 creuse du pied avant 7. Dans cette configuration, le raidisseur 23 du pied avant 7 comprend donc une portion supérieure 23.1 positionnée entre les pattes 15.1 du renfort latéral 15 avant et les portions 19, 20, 21 concernées de la paroi de la poutre 8 du pied avant 7. Mais il comprend également une portion inférieure 23.2 qui est, quant à elle, située en dessous du renfort latéral 15 avant.

Avantageusement, le pied avant 7 gauche peut en outre comprendre un renfort 18 de charnière supérieure. Ce renfort 18 de charnière est situé au-dessus du raidisseur 23 et entre le renfort latéral 15 avant et la poutre 8 creuse du pied avant 7. En plus de renforcer la charnière supérieure 17.1 proprement dite de la porte avant 5, le rôle de ce renfort 18 est également de renforcer la poutre 8 creuse du pied avant 7 gauche à l'encontre des efforts générés lors d'un choc frontal sur le bloc avant. Toutefois, cet apport de rigidité est seulement complémentaire à l'apport de raideur maximale apporté par le raidisseur 23 en acier.

Si sur la figure 3, la poutre 8 du pied avant 7 présente en l'occurrence une section en forme de L, il est bien entendu que la poutre 8 peut présenter une section de forme différente comme par exemple une section en U. Dans ce cas, la poutre 8 creuse comprend une portion latérale extérieure (non représentée), une portion transversale (non représentée) avant et une portion transversale arrière (non représentée). Il s'ensuit donc que le raidisseur 23 correspondant présente alors également un profil qui épouse la section en U de la poutre 8 du pied avant 7.

La figure 4 est une vue en perspective d'un mode de réalisation du pied avant 7 droit d'une structure 1 de véhicule automobile selon l'invention. Sur cette figure le raidisseur 23 en forme de L est situé à proximité du faisceau 24 de passage des câbles. Comme le renfort latéral 15 avant n'a pas été ici représenté, il est possible d'observer que le raidisseur 23 épouse la portion longitudinale 19 externe, la portion coudée 21, et la portion transversale 20 avant de la poutre 8 du pied avant 7 droit.

La figure 5 montre une seconde vue en perspective du mode de réalisation du pied avant 7 droit de la figure 4. Sur cette figure un renfort 18 de charnière supérieure est fixé sur la portion supérieure 23.1 du raidisseur 23. La fixation est en l'occurrence, sur cette figure, effectuée par des points de soudure électrique.

La figure 6 illustre une structure avant gauche d'une structure 1 de véhicule automobile selon l'invention après un choc frontal à 64km/h. Suite aux poussées longitudinales selon un axe X, le renfort latéral 15 avant du côté d'habitacle qui constitue un des éléments de la troisième voie d'effort, s'est légèrement décalé contre la portion transversale 20 avant du pied avant 7 gauche mais sans déstabiliser le pied avant 7. Grâce au raidisseur 23 (non visible) qui vient d'être décrit, le pied avant 7 a conservé son intégrité, il n'y a pas de rupture de liaison et les intrusions dans l'habitacle sont donc été évitées.

De manière générale, cette invention offre l'avantage de fournir un pied avant renforcé dont la stabilité est améliorée et peut donc mieux maîtriser les déformations occasionnées par un choc frontal selon les normes européennes. En conséquence, la transmission des efforts résultants du choc sont mieux transmis vers l'arrière de la structure de la caisse du véhicule automobile et de sa porte, ceci permettant ainsi de garantir l'intégrité de l'espace de survie de l'habitacle. Cette invention prévue préférentiellement pour consolider les pieds avant des véhicules automobiles lourds, est avantageuse pour cette catégorie de véhicule car un seul et simple raidisseur en acier est utilisé.

## Revendications

1. Structure (1) de véhicule automobile, comprenant :
- un habitacle (3) avec deux côtés (2) opposés latéralement ; et
- au moins un pied avant (7) formant une poutre creuse (8) s'étendant verticalement à l'avant et à un des deux côtés (2) de l'habitacle (3), ledit pied (7) comprenant une zone de fixation (17) de charnière inférieure (17.2) de porte (5) avant et une zone de fixation (17) de charnière supérieure (17.1) de ladite porte (5);
le ou chacun des pieds avant (7) comprenant, en outre, un raidisseur (23) situé sur une face avant (20) de la poutre creuse (8), entre les zones de fixation (17) des charnières supérieure inférieure (17.1, 17.2), **caractérisé en ce que** le ou chacun des raidisseurs (23) est une plaque de profil en U ou en L, et la poutre creuse (8) du ou de chacun des pieds avant (7) comprend une paroi avec une portion longitudinale (19) extérieure, une portion transversale (20) avant formant la face avant (20) de ladite poutre (8) et une portion coudée (21) reliant lesdites portions longitudinale (19) et transversale (20), la plaque de raidisseur (23) correspondante épousant, sur une hauteur donnée, au moins partiellement la portion longitudinale (19), la portion coudée (21) et au moins partiellement la portion transversale (20)

2. Structure (1) selon la revendication 1, **caractérisée en ce que** la plaque du ou de chacun des raidisseurs (23) présente une épaisseur supérieure à 0.8mm et/ou inférieure à 2mm.

3. Structure (1) selon l'une des revendications 1 à 2, **caractérisée en ce que** ladite structure (1) comprend, en outre, au moins un renfort latéral (15) avant s'étendant vers l'avant depuis le ou un des pieds avant (7) et au-dessus d'une baie de roue (10) située devant ledit pied (7), le raidisseur (23) correspondant étant situé entre ledit renfort (15) et la poutre (8) creuse dudit pied avant (7).

4. Structure (1) selon les revendications 1 et 3, **caractérisée en ce que** le ou chacun des renforts latéraux (15) avant comprend des pattes (15.1) de fixation à la portion longitudinale (19) extérieure et à la portion transversale (20) avant de la paroi de la poutre (8) correspondante, le raidisseur (23) correspondant comprenant une portion supérieure (23.1) entre lesdites pattes (15.1) et lesdites portions (19, 20, 21) de paroi et une portion inférieure (15.2) située en dessous dudit renfort (15).

5. Structure (1) selon l'une des revendications 1 à 4, **caractérisée en ce que** le ou chacun des pieds avant (7) comprend, en outre, un renfort (18) de charnière supérieure situé au-dessus du raidisseur (23) correspondant.

6. Structure (1) selon l'une des revendications 3 ou 4, et selon la revendication 5, **caractérisée en ce que** le ou chacun des renforts (18) de charnière comprend une portion située entre le renfort latéral (15) avant et la poutre (8) creuse correspondants.

7. Structure (1) selon l'une des revendications 5 ou 6, **caractérisée en ce que** la poutre (8) creuse du ou de chacun des pieds avant (7) comprend une section en U avec une portion latérale extérieure, une portion transversale avant et une portion transversale arrière, le renfort (18) de charnière correspondant présentant un profil en U épousant la section en U de ladite poutre (8).

8. Structure (1) selon l'une des revendications 1 à 7, **caractérisée en ce que** le ou chacun des raidisseurs (23) est fixé à la poutre (8) creuse correspondante par des points de soudure électrique par résistance.

## Patentansprüche

1. Fahrzeugstruktur (1) mit
- einem Fahrgastraum (3) mit zwei seitlich gegenüberliegenden Seiten (2); und
- mindestens ein Vorderfuß (7), der einen hohlen, sich vertikal vor und an einer der beiden Seiten (2) des Fahrgastraums (3) erstreckenden Träger (8) bildet, wobei der Fuß (7) einen unteren Scharnierbefestigungsbereich (17) der vorderen Tür (5) und einen oberen Scharnierbefestigungsbereich (17.1) der Tür (5) aufweist;
Der oder jeder der Vorderfüße (7) umfasst ferner eine Versteifung (23), die auf einer Vorderseite (20) des Hohlbalkens (8) zwischen den Befestigungsbereichen (17) der unteren Obergelenke (17.1, 17.2) angeordnet ist, **dadurch gekennzeichnet, dass** die oder jede der Versteifungen (23) eine U- oder L-Profilplatte ist und Der Hohlbalken (8) des oder jedes der Vorderfüße (7) umfasst eine Wand mit einem äußeren Längsabschnitt (19), einen vorderen Querabschnitt (20), der die Vorderseite (20) des Balkens (8) bildet, und einen abgewinkelten Abschnitt (21), der die Längs- (19) und Querabschnitte (20) verbindet, wobei die entsprechende Versteifungsplatte über eine bestimmte Höhe annimmt zumindest teilweise der Längsabschnitt (19), der Winkelabschnitt (21) und zumindest teilweise der Querabschnitt (20)

2. Struktur (1) nach Anspruch 1, **dadurch gekennzeichnet, dass** die Platte der oder jeder der Versteifungen (23) eine Dicke von mehr als 0,8 mm und/oder weniger als 2 mm aufweist.

3. Struktur (1) nach einem der Ansprüche 1 bis 2, **dadurch gekennzeichnet, dass** die Struktur (1) ferner mindestens eine vordere seitliche Verstärkung (15) umfasst, die sich von dem oder einem der vorderen Füße (7) nach vorne erstreckt und über einer Radabdeckung (10) liegt, die vor dem Fuß (7) angeordnet ist, wobei die entsprechende Versteifung (23) zwischen der Verstärkung (15) angeordnet ist (7) und der hohle Träger (8) des vorderen Fußes (7).

4. Struktur (1) nach den Ansprüchen 1 und 3, **dadurch gekennzeichnet, dass** die oder jede der vorderen Seitenverstärkungen (15) Laschen (15.1) zur Befestigung am äußeren Längsabschnitt (19) und am vorderen Querabschnitt (20) der Wand des entsprechenden Trägers (8) aufweist, wobei die entsprechende Versteifung (23) einen oberen Abschnitt (23.1) zwischen den Laschen (1) aufweist 5.1) und die Wandteile (19, 20, 21) und ein unterer Abschnitt (15.2) unterhalb der Verstärkung (15).

5. Struktur (1) nach einem der Ansprüche 1 bis 4, **dadurch gekennzeichnet, dass** der oder jeder der vorderen Füße (7) ferner eine obere Scharnierverstärkung (18) umfasst, die oberhalb der entsprechenden Versteifung (23) angeordnet ist.

6. Struktur (1) nach einem der Ansprüche 3 oder 4 und nach Anspruch 7, **dadurch gekennzeichnet, dass** die oder jede der Scharnierverstärkungen (18) einen Abschnitt umfasst, der zwischen der vorderen seitlichen Verstärkung (15) und dem entsprechenden hohlen Träger (8) angeordnet ist.

7. Struktur (1) nach einem der Ansprüche 5 oder 6, **dadurch gekennzeichnet, dass** der hohle Träger (8) des oder jedes der vorderen Füße (7) einen U-förmigen Querschnitt mit einem äußeren seitlichen Abschnitt, einem vorderen Querabschnitt und einem hinteren Querabschnitt aufweist, wobei die entsprechende Scharnierverstärkung (18) ein U-förmiges Profil aufweist, das dem U-förmigen Querschnitt des Trägers (8) entspricht.

8. Struktur (1) nach einem der Ansprüche 1 bis 7, **dadurch gekennzeichnet, dass** die oder jede der Versteifungen (23) an dem entsprechenden hohlen Träger (8) durch elektrische Widerstandsschweißpunkte befestigt ist.

## Claims

1. Motor vehicle structure (1), including:
- an interior (3) with two sides (2) lateral opposite; and
- at least one front foot (7) forming a hollow beam (8) extending vertically to the front and to one of the two sides (2) of the carrier (3), that foot (7) comprising a fastening zone (17) of the lower hinge (17.2) of the front door (5) and a fastening zone (17) of the upper hinge (17.1) of that carrier door (5);
the front foot(s) (7), which also includes a stiffener (23) located on a front face (20) of the hollow beam (8), between the attachment zones (17) of the lower hinges (17.1, 17.2), in that the stiffener(s) (23) is a U-shaped or U-shaped plate L, and the hollow girder (8) of the front foot(s) (7) includes a wall with an outer longitudinal portion (19), a transverse portion (20) before forming the front face (20) of the front beam (8), and a sewn portion (21) connecting the longitudinal portion (19) and transverse portion (20), the corresponding stiffener plate (23) at least partially embrace the longitudinal portion (19), the bent portion (21), and at least partially blend the transverse portion (20) on a given height

2. Structure (1) according to Claim 1, characterized that the plate of the stiffener(s) (23) has a thickness greater than 0.8mm and/or less than 2mm.

3. Structure (1) in accordance with one of claims 1 to 2, **characterized by** that structure (1), in addition, includes at least one side reinforcement (15) forward extending from one or more front feet (7) and above a wheel bay (10) located in front of the said foot (7), with the corresponding stiffener (23) located between the said reinforcement (1) 5) and the beam (8) dug the foot before (7).

4. Structure (1) according to claims 1 and 3, characterized that the front side reinforcement(s) (15) includes legs (15.1) of attachment to the outer longitudinal portion (19) and the outer transverse portion (20) before the wall of the corresponding beam (8), the corresponding stiffener (23) comprising a higher portion (23.1) between the said patches tes (15.1) and the said portions (19, 20, 21) of wall and a lower portion (15.2) below the said reinforcement (15).

5. Structure (1) according to one of the claims 1 to 4, **characterized by** that the front foot(s) (7) also includes a top hinge reinforcement (18) above the corresponding stiffener (23).

6. Structure (1) according to one of claims 3 or 4, and according to claim 7, characterized that the hinge reinforcement(18) includes a portion between the front side reinforcement(15) and the corresponding hollow beam(8).

7. Structure (1) in accordance with one of claims 5 or 6, characterized that the beam (8) dug on the front foot(s) (7) includes a U-section with an outer side portion, a front cross section and a rear cross section, the corresponding U-shaped reinforcement (18) of the hinge bearing embodying the U-section of that beam (8).

8. Structure (1) in accordance with one of the claims 1 to 7, **characterized by** that the stiffener(s) (23) is attached to the corresponding hollow beam(s) (8) by electrical stiffening points by resistance.
